(19) Europäisches Patentamt
European Patent Office
Office européen des brevets

(11) **EP 2 687 001 B1**

(12) **FASCICULE DE BREVET EUROPEEN**

(45) Date de publication et mention de la délivrance du brevet:
**16.08.2017 Bulletin 2017/33**

(21) Numéro de dépôt: **12713225.6**

(22) Date de dépôt: **12.03.2012**

(51) Int Cl.:
*H04L 29/08* (2006.01)    *G06F 12/12* (2016.01)
*G06F 17/30* (2006.01)

(86) Numéro de dépôt international:
**PCT/FR2012/050512**

(87) Numéro de publication internationale:
**WO 2012/123670 (20.09.2012 Gazette 2012/38)**

(54) **TECHNIQUE DE COMMUNICATION DANS UN RESEAU DE COMMUNICATION AVEC ACHEMINEMENT PAR NOM**

VERFAHREN ZUR KOMMUNIKATION IN EINEM KOMMUNIKATIONSNETZ MIT NAMENSBASIERTEM ROUTING

TECHNIQUE FOR COMMUNICATION IN A COMMUNICATION NETWORK WITH NAME-BASED ROUTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2011 FR 1152102**

(43) Date de publication de la demande:
**22.01.2014 Bulletin 2014/04**

(73) Titulaire: **Orange**
**75015 Paris (FR)**

(72) Inventeurs:
• **MUSCARIELLO, Luca**
  **F-92290 Chatenay Malabry (FR)**
• **GALLO, Massimo**
  **F-92130 Issy Les Moulineaux (FR)**

(56) Documents cités:
• **ZHANG LIXIA ET AL: "Named Data Networking (NDN) Project NDN-0001", INTERNET CITATION, 31 octobre 2010 (2010-10-31), pages 1-26, XP002660910, Extrait de l'Internet: URL:http://www.named-data.net/ndn-proj.pdf [extrait le 2011-10-10]**
• **WANG J: "A SURVEY OF WEB CACHING SCHEMES FOR THE INTERNET", COMPUTER COMMUNICATION REVIEW, ACM, NEW YORK, NY, US, vol. 29, no. 5, 1 octobre 1999 (1999-10-01), pages 36-46, XP000927253, ISSN: 0146-4833, DOI: 10.1145/505696.505701**
• **KAI CHENG ET AL: "Multicache-based content management for Web caching", WEB INFORMATION SYSTEMS ENGINEERING, 2000. PROCEEDINGS OF THE FIRST IN TERNATIONAL CONFERENCE ON HONG KONG, CHINA 19-21 JUNE 2000, LOS ALAMITOS, CA, USA,IEEE COMPUT. SOC, US, vol. 1, 19 juin 2000 (2000-06-19), pages 42-49, XP010521835, ISBN: 978-0-7695-0577-0**

**Description**

L'invention concerne une technique de communication dans un réseau de communication centré sur les informations, mettant en oeuvre un acheminement par nom.

Un exemple se trouve dans XP010521835. L'article de Van Jacobson et al., intitulé « Networking Named Content » et publié en 2009 dans les actes de la conférence CoNEXT'09 présente une nouvelle architecture centrée sur les contenus, appelée « Content-Centric Networking » en anglais. Cette architecture propose de changer le modèle de communication actuel basé sur un adressage physique dans le réseau par un nouveau modèle de communication basé sur un adressage par nom des contenus.

Un flot peut être fourni pour différentes applications, temps réel ou non, et est identifié dans le réseau de communication par un nom ou identifiant de flot. Un flot est composé de segments de données. Un segment de données est, quant à lui, identifié par un numéro de segment et l'identifiant de flot.

Plus précisément, pour obtenir un segment de données d'un flot, une entité cliente transmet une requête relative à ce segment de données, appelée « Interest Packet ». Sur réception de cette requête, un noeud d'acheminement vérifie s'il dispose du segment de données recherché. Si tel est le cas, il le transmet alors vers l'interface par l'intermédiaire de laquelle la requête a été reçue, à destination ainsi de l'entité cliente et par l'intermédiaire d'autres noeuds d'acheminement le cas échéant. S'il ne dispose pas du segment de données recherché, il vérifie dans une table de demandes pendantes PIT, pour « Pending Interest Table » en anglais, s'il a déjà transmis une requête relative au même segment de données. Si tel n'est pas le cas, il mémorise dans la table de demandes pendantes PIT l'identifiant du segment de données recherché en association avec un identifiant de l'interface par l'intermédiaire de laquelle la requête relative au segment de données recherché a été reçue. Il achemine ensuite dans le réseau de communication la requête en fonction de l'identifiant de flot. Dans le cas contraire, c'est-à-dire lorsque la table de demandes pendantes comprend déjà l'identifiant du segment de données recherché, il ne transmet pas la requête reçue mais associe dans la table de demandes pendantes PIT à l'identifiant du segment de données recherché un identifiant de l'interface par l'intermédiaire de laquelle la requête a été reçue. On constate que dans ce modèle de communication, chaque noeud d'acheminement a pour rôle d'agréger les requêtes relatives à un même segment de données d'un flot. A différentes étapes du traitement du segment de données, le dispositif d'acheminement est susceptible de mettre en file le segments de données avant de les acheminer. En cas de congestion d'une des files du noeud d'acheminement, un nouveau segment de données reçu n'est généralement pas mémorisé et par conséquent n'est pas acheminé. L'absence d'acheminement de ce segment de données a pour effet, du fait de la fonction d'agrégation du noeud d'acheminement, de ne pas satisfaire une pluralité d'entités clientes ayant requis le segment de données. Le nombre d'entités clientes concernées dépend du niveau d'agrégation effectué lors du traitement des requêtes relatives à un segment de données du flot. On rappelle que dans le modèle de communication classique, dans un réseau de communication par paquets, avec un adressage physique, une seule entité cliente est impactée par la suppression d'un paquet qu'elle a requis.

Un des buts de l'invention est de remédier à des insuffisances/inconvénients de l'état de la technique et/ou d'y apporter des améliorations.

Selon un premier aspect, l'invention a pour objet un procédé de communication mis en oeuvre par un dispositif d'acheminement dans un réseau de communication mettant en oeuvre un acheminement par nom, ledit dispositif étant apte à agréger une pluralité de requêtes relatives à un segment de données d'un flot en une autre requête et à mémoriser dans une file d'attente des segments de données appartenant à différents flots avant acheminement par le dispositif à destination des entités clientes les ayant requis, ledit procédé comprenant :

- une étape de détermination d'un crédit associé à un flot, ledit crédit variant en fonction d'un nombre de requêtes transmises par des entités clientes et relatives à des segments de données appartenant au flot ;
  et sur réception d'un segment de données en réponse à ladite autre requête, lorsque l'espace mémoire disponible de la file d'attente ne permet pas de mémoriser le segment de données reçu,
- une étape de sélection d'un flot, dans laquelle on sélectionne un flot ayant au moins un segment de données mémorisé dans la file d'attente et pour lequel le crédit associé est le plus faible ;
- une étape de suppression de la file d'attente d'un segment de données appartenant au flot sélectionné ;

ledit procédé comprenant en outre une étape d'acheminement du segment de données à destination des entités clientes l'ayant requis, après extraction de la file d'attente.

Des applications transmettent des segments de données relatifs à un flot. Il s'agit par exemple d'applications telles que des services de diffusion de contenus temps réel, à la demande ou bien encore «Live ». Il peut également s'agir d'applications de téléphonie, dans lesquels des segments sont conservés pour pallier d'éventuelles pertes de segments. Aucune limitation n'est attachée au type d'application.

De tels segments de données peuvent être des objets ou bien des morceaux d'objet ou bien encore des paquets.

Le réseau de communication est un réseau centré sur les contenus. Il met ainsi en oeuvre un acheminement par nom et agrège des requêtes relatives à un segment de données d'un flot.

Ainsi, grâce à l'invention, il est possible de limiter le nombre d'entités clientes concernées par la suppression du segment de données. La charge induite sur le réseau de communication lors du renouvellement par les entités clientes concernées des requêtes relatives au segment de données supprimé est ainsi réduite.

Selon une caractéristique particulière, le crédit associé à un flot est mis à jour par ledit dispositif sur réception d'une requête relative à un segment de données du flot et en fonction d'un autre crédit associé au flot compris dans ladite requête.

Les crédits associés au flot sont ainsi transmis de proche en proche par les dispositifs d'acheminement le long du chemin vers l'entité disposant du segment de données requis. Le crédit associé au flot déterminé par le dispositif d'acheminement va alors prendre en compte l'ensemble des requêtes transmises dans une arborescence établie des entités clientes vers le dispositif d'acheminement par le biais de la table des demandes pendantes. On rappelle que dans ce type de réseau de communication, chaque dispositif d'acheminement ne transmet qu'une seule des requêtes relatives à un segment de données d'un flot en mettant en oeuvre une agrégation de celles-ci. En prenant en compte l'autre crédit associé au flot déterminé par le dispositif d'acheminement qui a transmis la requête, on améliore les performances lors de la sélection du flot.

Selon une autre caractéristique particulière, le crédit associé au flot est déterminé par une moyenne glissante entre une valeur précédente du crédit associé au flot et ledit autre crédit associé au flot.

Ainsi, le crédit associé au flot évolue de manière régulière, sans variations importantes.

Selon une autre caractéristique particulière, on réitère l'étape de suppression, et le cas échéant l'étape de sélection d'un flot, tant que l'espace mémoire disponible de la file d'attente ne permet pas de mémoriser le segment de données reçu.

Selon une autre caractéristique particulière, un dispositif d'acheminement auquel est directement reliée une entité cliente initialise le crédit associé au flot dans la requête relative à un segment de données du flot reçue de l'entité cliente.

Ainsi aucune modification n'est requise au niveau de l'entité cliente et le comportement est homogène dans le réseau de communication.

Le dispositif d'acheminement qui initialise le crédit associé au flot dans la requête peut être une passerelle d'accès au réseau ou bien encore un équipement multiplexeur d'accès.

Il est également possible que l'entité cliente initialise elle-même le crédit associé au flot porté par la requête relative au segment de données du flot qu'elle transmet.

Selon une autre caractéristique particulière, le crédit associé au flot est réinitialisé lorsqu'aucune requête relative à un segment de données dudit flot n'est pendante.

Ainsi, le crédit associé au flot est représentatif d'une popularité du flot, qui peut n'être que ponctuelle.

Selon un deuxième aspect, l'invention concerne également un dispositif d'acheminement dans un réseau de communication mettant en oeuvre un acheminement par nom, agencé pour agréger une pluralité de requêtes relatives à un segment de données d'un flot en une autre requête :

- des moyens de mémorisation de segments de données appartenant à différents flots dans une file d'attente en vue de leur acheminement à destination d'entités clientes les ayant requis ;
- des moyens de détermination d'un crédit associé à un flot, ledit crédit variant en fonction d'un nombre de requêtes transmises par des entités clientes et relatives à des segments de données appartenant au flot ;
- des moyens d'acheminement du segment de données à destination des entités clientes l'ayant requis, après extraction de la file d'attente ;
- des moyens de sélection d'un flot, agencés pour sélectionner un flot ayant au moins un segment de données mémorisé dans la file d'attente et pour lequel le crédit associé est le plus faible ;
- des moyens de suppression de la file d'attente d'un segment de données appartenant au flot sélectionné,

lesdits moyens de sélection et de suppression étant activés lorsque l'espace mémoire disponible de la file d'attente ne permet pas de mémoriser un segment de données reçu.

Selon une caractéristique particulière, le dispositif comprend en outre des moyens d'acheminement dans le réseau de requêtes émises par des entités clientes, agencés pour insérer dans une requête relative à un segment de données d'un flot le crédit associé au flot déterminé par les moyens de détermination.

Selon un troisième aspect, l'invention concerne en outre un réseau de communication, comprenant un dispositif d'acheminement tel que décrit précédemment.

Selon un quatrième aspect, l'invention concerne un programme pour un dispositif d'acheminement, comprenant des instructions de code de programme destinées à commander l'exécution des étapes du procédé précédemment décrit, lorsque ledit programme est exécuté par ledit dispositif et un support d'enregistrement lisible par un dispositif d'acheminement sur lequel est enregistré un programme pour un dispositif d'acheminement.

L'invention sera mieux comprise à l'aide de la description suivante de modes de réalisation particuliers du procédé de l'invention, en référence aux dessins annexés sur lesquels :

- la figure 1 représente un réseau de communication ;
- la figure 2 représente les étapes du procédé selon un mode particulier de réalisation de l'invention ;
- la figure 3 représente un enregistrement relatif à un flot dans une table de demandes pendantes selon un mode particulier de réalisation ;
- la figure 4 représente un dispositif d'acheminement selon un mode particulier de l'invention.

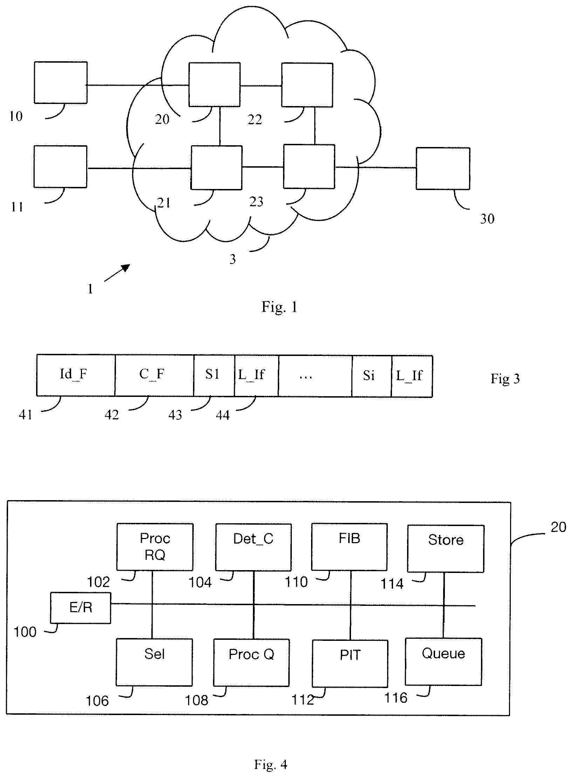

La figure 1 représente un réseau de communication 1 permettant à des entités clientes 10, 11 d'accéder à différentes applications comme la télévision, la vidéo à la demande, l'Internet. Chaque entité cliente 10, 11 est reliée à un réseau d'accès 3. Ce dernier permet aux entités clientes d'accéder aux applications mises en oeuvre par des serveurs, dont un d'entre eux, le serveur 30, est représenté sur la figure 1.

Lorsqu'une entité cliente 10, 11 accède à une application donnée mise en oeuvre par le serveur 30, des segments de données relatifs à cette application donnée sont échangés du serveur 30 vers l'entité cliente 10, 11. De tels segments de données peuvent être des objets ou bien des morceaux d'objet ou bien encore des paquets.

Il peut s'agir d'une navigation sur un site Web comprenant des segments de données. Il peut également s'agir d'une application de diffusion de contenus, par exemple dans une architecture de type CDN, pour « Content Delivery Network ».

On se place par la suite dans le cas particulier où le réseau de communication est centré sur l'information ICN, pour « Information-Centric Networking ». A titre d'exemple non limitatif, le réseau de communication met en oeuvre les mécanismes d'adressage par nom, tels que décrits dans l'article Van Jacobson et al., intitulé «Networking Named Content », mentionné précédemment. Un tel réseau de communication est également appelé réseau centré sur les contenus CCN, pour « Content Centric Network ». A titre d'exemple non limitatif, selon cet article, un identifiant de flot Id_F est organisé de la façon suivante :

- un préfixe, correspondant à un nom acheminable ou routable, par exemple « parc.com »,
- un nom dans l'organisation, par exemple « videos/WidgetA.mpg ».

Un segment de données appartenant à un flot est identifié par l'identifiant du flot, des informations temporelles et des informations relatives au numéro de segment.

Selon cet exemple, le segment de données est identifié « /parc.com/videos/WidgetA.mpg/_v <timestamp>/_s3 ».

Plus précisément, l'entité cliente 10 transmet une ou plusieurs requêtes relatives à des segment de données. Dans le cas particulier où le serveur 30 dispose de ces segments de données, ce dernier les transmet à destination de l'entité cliente. Les segments de données transitent alors par l'intermédiaire du réseau d'accès 3 à destination de l'entité cliente.

Le réseau d'accès 3 comprend des dispositifs d'acheminement 20, 21, 22, 23. Ces dispositifs d'acheminement 20-23, dont l'un d'entre eux le dispositif d'acheminement 20 est représenté à la figure 4, comprennent notamment dans ce type de réseau de communication trois structures de données, :

- une première table 110, appelée table d'acheminement FIB, pour «Forwarding Information Base », agencée pour mémoriser des données d'acheminement, plus précisément une liste d'interfaces en association avec un préfixe ;
- une deuxième table 112, appelée table des demandes pendantes PIT, pour « Pending Interest Table », agencée pour mémoriser une liste d'interfaces par l'intermédiaire desquelles une ou des requêtes relatives à un segment de données d'un flot ont été reçues ;
- des moyens de mémorisation 114, appelée magasin de contenus ou « Content Store », agencés pour mémoriser des segments de données.

Un tel dispositif d'acheminement peut être un routeur du réseau, une passerelle d'accès au réseau, un équipement multiplexeur d'accès.

L'entité cliente 10 souhaitant obtenir un segment de données d'un flot transmet une requête IP, pour « Interest Packet », qui est reçue par le dispositif d'acheminement 20. S'il ne dispose pas du segment de données requis dans le magasin de contenus 114, le dispositif d'acheminement 20 utilise alors la table des demandes pendantes 112 pour vérifier s'il a déjà transmis une requête d'une autre entité cliente relative à ce segment de données. Si tel est le cas, il ajoute dans la table des demandes pendantes un identifiant de l'interface par laquelle il a reçu la requête, en association avec un identifiant du segment de données recherché. Lorsque le dispositif d'acheminement 20 reçoit le segment de données recherché, il le retransmet à l'ensemble des entités clientes l'ayant requis. S'il n'a pas encore transmis de requête relative à ce segment de données, le dispositif d'acheminement 20 mémorise dans la table des demandes pendantes 112 l'identifiant du segment de données en association avec un identifiant de l'interface par l'intermédiaire de laquelle il a reçu la requête. Puis, il achemine la requête vers un autre dispositif d'acheminement à l'aide de la table d'acheminement 110. On note qu'ainsi une arborescence est établie par le biais de la table des demandes pendantes 112 des entités clientes vers le dispositif d'acheminement.

Les dispositifs d'acheminement 20-23 comprennent généralement au moins une file d'attente 116, agencée pour mémoriser des segments de données en vue de leur retransmission à destination d'entités clientes 10, 11 les ayant requis. Il peut s'agir de files d'attente globales à l'ensemble des flots ou bien encore de files d'attente mises en oeuvre selon des techniques d'ordonnancement par flot, du type « flow aware queuing policy », telles que la méthode « Deficit Round Robin ».

Une partie de la table des demandes pendantes 112, plus précisément un enregistrement relatif à un flot, est représentée à la figure 3. Pour un flot donné pour lequel une demande est pendante, identifié par l'identifiant de flot Id_F 41, l'enregistrement comprend un ou plusieurs couples de données, un couple comprenant un identifiant du segment de données 43 et une liste d'interfaces 44. Selon un premier mode particulier de réalisation de l'invention, la table des demandes pendantes 112 comprend en association avec l'identifiant du flot 41, un crédit 42 associé au flot et variant en fonction d'un nombre de requêtes reçues en provenance d'entités clientes et relatives à des segments de données de ce flot.

Lorsqu'aucun couple de données 43-44 n'est présent dans la table des demandes pendantes 112, l'enregistrement relatif au flot est supprimé. Ceci permet de réinitialiser le crédit associé au flot.

Aucune restriction n'est attachée à ce mode particulier de réalisation. Il est également possible dans un deuxième mode de réalisation de mémoriser dans une table indépendante de la table des demandes pendantes 112, le crédit associé au flot. Le crédit associé au flot est alors réinitialisé lorsqu'aucune requête relative à des segments de ce flot n'est pendante. Le flot devient inactif.

Selon un autre mode particulier de réalisation de l'invention, une requête relative à un segment de données d'un flot comprend un crédit intermédiaire. Ce crédit intermédiaire est décrit plus précisément en relation avec la description du procédé de communication.

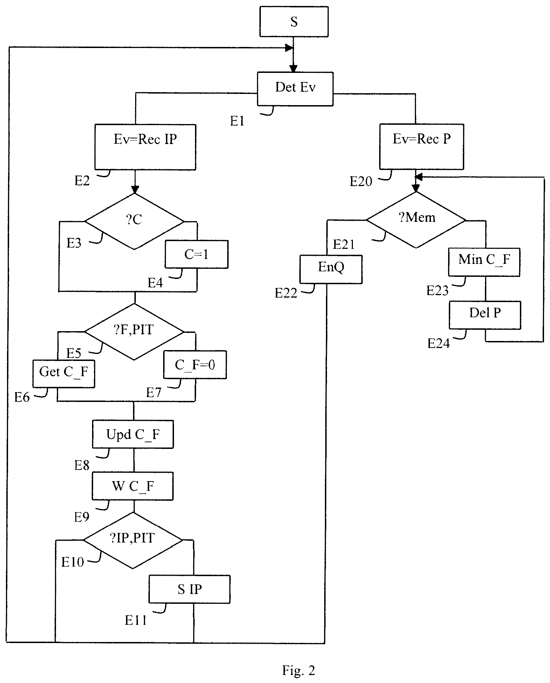

Nous allons maintenant décrire le procédé de communication, tel qu'il est mis en oeuvre par le dispositif d'acheminement 20 dans un mode particulier de réalisation, en relation avec la figure 2.

Dans une étape E1, le dispositif d'acheminement 20 est en attente de réception d'un segment de données ou d'une requête relative à un segment de données.

Dans une étape E2, le dispositif d'acheminement 20 reçoit une requête relative à un segment de données d'un flot.

Dans une étape E3, le dispositif d'acheminement 20 vérifie si la requête reçue comprend un crédit intermédiaire. Si tel n'est pas le cas, le dispositif d'acheminement 20 initialise dans une étape E4 ce crédit intermédiaire à la valeur un. On note que dans ce cas, le dispositif d'acheminement auquel est relié l'entité cliente, dit dispositif d'entrée, initialise le crédit intermédiaire. Aucune modification n'est requise au niveau de l'entité cliente pour mettre en oeuvre le procédé de communication. Ce dispositif d'entrée peut être une passerelle à laquelle est reliée l'entité cliente, ou bien encore un équipement multiplexeur d'accès DSLAM, pour « Digital Subscriber Line Access Multiplexer ».

Dans une étape E5, le dispositif d'acheminement 20 vérifie en fonction de l'identifiant du flot si un enregistrement relatif au flot est présent dans la table des demandes pendantes 112, c'est-à-dire si au moins une requête relative à un segment de données du flot est pendante. Si tel est le cas, dans une étape E6, le dispositif d'acheminement obtient le crédit associé au flot C_F à partir du champ 42 de la table des demandes pendantes 112.

Si le flot n'est pas présent dans la table des demandes pendantes 112, dans une étape E7, le dispositif d'acheminement 20 initialise le crédit associé au flot à la valeur zéro.

Dans une étape E8 de détermination d'un crédit C_F associé au flot, le dispositif d'acheminement 20 met à jour le crédit associé au flot en fonction du crédit intermédiaire associé au flot. Plus précisément, le crédit associé au flot est déterminé par une moyenne glissante entre une valeur précédente du crédit associé au flot et le crédit intermédiaire associé au flot. Ceci peut être mis en oeuvre à l'aide de l'équation suivante :

$$C\_F = \alpha * C\_F + (1-\alpha) * \text{credit}(IP)$$

où le crédit intermédiaire est noté credit(IP) et $\alpha$ est un paramètre compris entre zéro et un.

Le paramètre $\alpha$ permet ainsi de pondérer le crédit intermédiaire reçu dans une requête. Les variations du crédit associé au flot sont ainsi lissées.

On peut par exemple choisir $\alpha$ à 0,9.

On constate ainsi que le crédit associé au flot varie en fonction d'un nombre de requêtes reçues d'entités clientes et relatives à des segments de données appartenant au flot. Lorsque le nombre de requêtes d'entités clientes relatives à des segments de données de ce flot est élevé, le crédit associé au flot augmente. Inversement, lorsque le nombre de requêtes d'entités clientes relatives à des segments de données de ce flot diminue, le crédit associé au flot diminue également. Le crédit associé au flot peut ainsi être représentatif d'une popularité du flot.

On rappelle ici également que le crédit associé à un flot est remis à zéro lorsqu'aucune requête relative à un segment de données de ce flot n'est pendante. Le crédit associé à un flot est ainsi mémorisé uniquement pour des flots actifs. Ceci permet de limiter les besoins additionnels en moyens de mémorisation. Ceci permet également suivre des variations dans la popularité des flots, un flot populaire pour une période donnée étant susceptible de devenir rapidement obsolète.

Dans une étape E9, le dispositif d'acheminement 20 met à jour dans la table des demandes pendantes 112 le crédit associé au flot dans le champ 42.

Dans une étape E10, le dispositif d'acheminement 20 vérifie dans la table des demandes pendantes 112 si une requête relative à ce segment de données a déjà été transmise. Si tel est le cas, selon le fonctionnement classique, la requête n'est pas retransmise et l'interface par l'intermédiaire de laquelle la requête a été reçue est ajoutée en association avec l'identifiant du segment de données. Le procédé repasse ensuite à l'étape E1 d'attente de réception.

Dans le cas contraire, dans une étape E11, le dispositif d'acheminement 20 met à jour dans la requête reçue le crédit intermédiaire avec le crédit associé au flot qu'il a déterminé à l'étape E8 et achemine la requête en fonction des données d'acheminement mémorisées dans la table d'acheminement 110. Le procédé repasse ensuite à l'étape E1 d'attente de réception. On note que selon l'invention, la requête relative à un segment de données d'un flot comprend un champ supplémentaire, prévu pour transmettre à un autre dispositif d'acheminement situé sur le chemin vers le serveur 30 le crédit associé au flot déterminé. Ce dernier correspond au crédit intermédiaire qui va être utilisé lors de la mise en oeuvre de l'étape E8 de détermination d'un crédit associé au flot du procédé de communication par cet autre dispositif d'acheminement. Il est également souligné que la requête relative au segment de données du flot reçue par le dispositif d'entrée, c'est-à-dire le dispositif d'acheminement auquel l'entité cliente est directement connectée, ne comprend pas ce champ supplémentaire. Le dispositif d'entrée est ainsi en charge d'initialiser le champ supplémentaire portant l'information de crédit.

On note qu'ainsi le crédit intermédiaire utilisé pour déterminer le crédit associé au flot correspond au crédit associé au flot déterminé par un autre dispositif d'acheminement ayant transmis la requête. Ainsi, le crédit associé au flot prend également en compte le degré d'agrégation des requêtes relatives à des segments de données de ce flot mis en oeuvre par l'autre dispositif d'acheminement, et indirectement par encore d'autres dispositifs d'acheminement situés sur l'arborescence permettant de joindre les entités clientes.

Dans une variante de réalisation, les étapes E3 et E4 ne sont pas mises en oeuvre. Dans ce cas, l'entité cliente 10 initialise le crédit intermédiaire dans la requête à la valeur un.

Dans une étape E20, le dispositif d'acheminement 20 reçoit un segment de données d'un flot. Il est ici souligné que grâce aux informations mémorisées dans la table des demandes pendantes 112, un segment de données suit exactement le chemin inverse des requêtes vers les entités clientes l'ayant requis.

Dans une étape E21, le dispositif d'acheminement 20 vérifie si l'espace mémoire disponible dans la file d'attente 116 permet de mémoriser le segment de données reçu.

Si tel est le cas, dans une étape E22, le dispositif d'acheminement 20 mémorise dans la file d'attente 116 le segment de données reçu. Le procédé repasse ensuite à l'étape E1 d'attente de réception.

Dans le cas contraire, c'est-à-dire lorsque l'espace mémoire disponible dans la file d'attente 116 ne permet pas de mémoriser le segment de données reçu, dans une étape E23 de sélection d'un flot, le dispositif d'acheminement 20 sélectionne un flot ayant au moins un segment de données mémorisé dans la file d'attente et pour lequel le crédit associé est le plus faible.

Puis dans une étape E24 de suppression, le dispositif d'acheminement 20 supprime de la file d'attente 116 un segment de données appartenant au flot sélectionné à l'étape E23. Le procédé repasse ensuite à l'étape E21 afin de vérifier si l'espace mémoire libéré est suffisant.

Dans une variante de réalisation, à l'étape E24, le dispositif d'acheminement 20 supprime autant de segments de données qu'il est nécessaire pour libérer l'espace mémoire nécessaire à la mémorisation du segment de données reçu.

On réitère ainsi l'étape E24 de suppression, et le cas échéant l'étape E23 de sélection d'un flot, tant que l'espace mémoire disponible de la file d'attente ne permet pas de mémoriser le segment de données reçu.

Ainsi, du fait de la sélection du flot présentant un crédit associé le plus faible, la suppression du ou des segments de données de ce flot minimise un nombre d'entités clientes concernées par cette suppression. La suppression du segment de données va déclencher un nouvel envoi par les entités clientes concernées d'une requête relative à ce segment de données. Lorsque les entités clientes concernées renouvellent leur requête, l'impact en terme de charge sur le réseau de communication est également minimisé.

Il est ici souligné que le crédit associé au flot a une signification locale au dispositif d'acheminement. Toutefois, le procédé de communication tel que décrit précédemment permet de prendre en compte les agrégations effectuées par les autres dispositifs d'acheminement situés sur le chemin inverse à destination de l'entité cliente requérante.

Il est également possible de choisir comme crédit associé au flot directement le nombre de requêtes relatives à des segments de données du flot. En variante, le nombre de requêtes est comptabilisé sur une période déterminée et est normalisé en fonction du nombre de requêtes relatives à l'ensemble des flots actifs.

Plus généralement, le crédit associé au flot peut varier par application d'une fonction monotone croissante au nombre de requêtes relatives à des segments de données du flot. Un exemple d'une telle fonction est la fonction logarithmique.

Dans le mode particulier de réalisation décrit précédemment, le sens de variation du crédit associé au flot est le même que celui du nombre de requêtes relatives à des segments de données du flot. D'autres choix d'implémentation sont possibles, notamment un sens de variation inverse, auquel cas on sélectionne le flot présentant un crédit associé le plus élevé.

Nous allons maintenant décrire un dispositif d'acheminement dans un mode particulier de réalisation de l'invention en référence à la figure 4. Un tel dispositif 20 est agencé pour traiter des segments de données appartenant à différents flots et comprend :

- la table d'acheminement 110 FIB décrite précédemment ;
- la table des demandes pendantes 112 PIT décrite précédemment ;
- les moyens de mémorisation 114 ou magasin de contenus décrit précédemment ;
- la file d'attente 116, décrite précédemment ;
- un module de communication 100 avec les autres dispositifs du réseau de communication, agencé pour émettre et recevoir des données, notamment des requêtes relatives à des segments de données appartenant à un flot et des segments de données ;
- un module 102 de traitement des requêtes relatives à des segments de données, agencé notamment pour acheminer les requêtes grâce aux données d'acheminement mémorisées dans la table d'acheminement 110 et transmettre les segments de données à destination des entités clientes les ayant requis grâce à la table des demandes pendantes 112 ;
- un module 104 de détermination d'un crédit associé à un flot (C_F), ledit crédit variant en fonction d'un nombre de requêtes reçues d'entités clientes et relatives à des segments de données appartenant au flot ;
- un module 106 de sélection d'un flot, agencé pour sélectionner un flot ayant au moins un segment de données mémorisé dans la file d'attente 116 et pour lequel le crédit associé est le plus faible ;
- un module 108 de gestion de la file d'attente 116.

Le module 108 est notamment agencé pour mémoriser un segment de données reçu dans la file d'attente 116, pour supprimer de la file d'attente 116 un segment de données appartenant au flot sélectionné, pour extraire de la file d'attente 116 un segment de données à acheminer. Le module 108 est également agencé pour déterminer l'espace mémoire disponible de la file d'attente 116 et pour activer le module de sélection 106 lorsque l'espace mémoire disponible de la file d'attente ne permet pas de mémoriser un segment de données reçu afin d'obtenir en retour un flot sélectionné.

Dans un mode de réalisation particulier, le module de traitement 102 est également agencé pour insérer dans une requête relative à un segment de données d'un flot le crédit associé au flot déterminé par le module de détermination 104 et pour extraire d'une requête relative à un segment de données d'un flot un crédit intermédiaire.

Les modules 102, 104, 106, 108 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif d'acheminement. L'invention concerne donc aussi :

- un programme pour un dispositif d'acheminement, comprenant des instructions de code de programme destinées à commander l'exécution des étapes du procédé précédemment décrit, lorsque ledit programme est exécuté par ledit dispositif ;
- un support d'enregistrement lisible par un dispositif d'acheminement sur lequel est enregistré le programme pour un dispositif d'acheminement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un réseau de communication comprenant au moins un dispositif d'acheminement tel que décrit précédemment.

## Revendications

**1.** Procédé de communication mis en oeuvre par un dispositif (20-23) d'acheminement dans un réseau de communication (1) mettant en oeuvre un acheminement par nom, ledit dispositif étant apte à agréger une pluralité de requêtes relatives à un segment de données d'un flot en une autre requête et à mémoriser dans une file d'attente (116) des segments de données appartenant à différents flots avant acheminement par le dispositif à destination des entités clientes les ayant requis, ledit procédé comprenant :

- une étape (E8) de détermination d'un crédit associé à un flot, ledit crédit variant en fonction d'un nombre de requêtes transmises par des entités clientes et relatives à des segments de données appartenant au flot ;
et sur réception d'un segment de données en réponse à ladite autre requête, lorsque l'espace mémoire disponible de la file d'attente ne permet pas de mémoriser le segment de données reçu,
- une étape (E23) de sélection d'un flot, dans laquelle on sélectionne un flot ayant au moins un segment de données mémorisé dans la file d'attente et pour lequel le crédit associé est le plus faible ;
- une étape (E24) de suppression d'un segment de données mémorisé dans la file d'attente, ledit segment de données mémorisé appartenant au flot sélectionné ;

ledit procédé comprenant en outre une étape d'acheminement du segment de données reçu à destination des entités clientes l'ayant requis, après extraction de la file d'attente.

2. Procédé selon la revendication 1, dans lequel le crédit associé à un flot est mis à jour par ledit dispositif sur réception (E2) d'une requête relative à un segment de données du flot et en fonction d'un autre crédit associé au flot compris dans ladite requête.

3. Procédé selon la revendication 2, dans lequel le crédit associé au flot est déterminé par une moyenne glissante entre une valeur précédente du crédit associé au flot et ledit autre crédit associé au flot.

4. Procédé selon la revendication 1, dans lequel on réitère l'étape de suppression, et le cas échéant l'étape de sélection d'un flot, tant que l'espace mémoire disponible de la file d'attente ne permet pas de mémoriser le segment de données reçu.

5. Procédé selon la revendication 2, dans lequel un dispositif d'acheminement auquel est directement reliée une entité cliente initialise le crédit associé au flot dans la requête relative à un segment de données du flot reçue de l'entité cliente.

6. Procédé selon la revendication 1, dans lequel le crédit associé au flot est réinitialisé lorsqu'aucune requête relative à un segment de données dudit flot n'est pendante.

7. Dispositif (20-23) d'acheminement dans un réseau de communication mettant en oeuvre un acheminement par nom, agencé pour agréger une pluralité de requêtes relatives à un segment de données d'un flot en une autre requête :

     - des moyens (116) de mémorisation de segments de données appartenant à différents flots dans une file d'attente en vue de leur acheminement à destination d'entités clientes les ayant requis ;
     - des moyens (104) de détermination d'un crédit associé à un flot, ledit crédit variant en fonction d'un nombre de requêtes transmises par des entités clientes et relatives à des segments de données appartenant au flot ;
     - des moyens d'acheminement du segment de données à destination des entités clientes l'ayant requis, après extraction de la file d'attente ;
     - des moyens (106) de sélection d'un flot, agencés pour sélectionner un flot ayant au moins un segment de données mémorisé dans la file d'attente et pour lequel le crédit associé est le plus faible ;
     - des moyens (108) de suppression d'un segment de données mémorisé dans la file d'attente, ledit segment de données appartenant au flot sélectionné,

lesdits moyens de sélection et de suppression étant activés lorsque l'espace mémoire disponible de la file d'attente ne permet pas de mémoriser un segment de données reçu.

8. Dispositif d'acheminement selon la revendication 7, comprenant en outre des moyens d'acheminement (102) dans le réseau de requêtes émises par des entités clientes, agencés pour insérer dans une requête relative à un segment de données d'un flot le crédit associé au flot déterminé par les moyens de détermination.

9. Réseau de communication comprenant au moins un dispositif d'acheminement selon la revendication 7.

10. Programme pour un dispositif d'acheminement, comprenant des instructions de code de programme destinées à commander l'exécution des étapes du procédé selon l'une des revendications 1 à 6, lorsque ledit programme est exécuté par ledit dispositif.

11. Support d'enregistrement lisible par un dispositif d'acheminement sur lequel est enregistré le programme selon la revendication 10.

**Patentansprüche**

1. Verfahren zur Kommunikation, das durch eine Vorrichtung (20-23) zum Routing in einem Kommunikationsnetz (1) umgesetzt wird, das ein namensbasiertes Routing umsetzt, wobei die Vorrichtung geeignet ist, mehrere Anfragen in Bezug auf ein Datensegment eines Stroms in einer anderen Anfrage zusammenzufassen und Datensegmente, die zu verschiedenen Strömen gehören, vor dem Routing durch die Vorrichtung zu den Client-Einheiten, die sie angefordert haben, in einer Warteschlange (116) zu speichern, wobei das Verfahren Folgendes aufweist:

     - einen Schritt (E8) des Bestimmens eines Kredits, das einem Strom zugeordnet ist, wobei das Kredit in Abhängigkeit von einer Anzahl an Anfragen, die durch die Client-Einheiten übertragen werden, und in Bezug auf Datensegmente, die zu dem Strom gehören, variiert;
und nach Empfangen eines Datensegments als Antwort auf die andere Anfrage, wenn der verfügbare Speicherplatz der Warteschlange nicht ermöglicht, das empfangene Datensegment zu speichern,
     - einen Schritt (E23) des Auswählens eines Stroms, wobei ein Strom ausgewählt wird, der mindestens ein Datensegment aufweist, das in der Warteschlange gespeichert ist und für das das zugeordnete Kredit das schwächste ist;
- einen Schritt (E24) des Löschens eines Datensegments, das in der Warteschlange gespeichert ist, wobei das gespeicherte Datensegment zu dem ausgewählten Strom gehört;

wobei das Verfahren ferner einen Schritt des Routings des empfangenen Datensegments zu Client-Einheiten, die es angefordert haben, nach dem Extrahieren aus der Warteschlange aufweist.

2. Verfahren nach Anspruch 1, wobei das Kredit, das einem Strom zugeordnet ist, durch die Vorrichtung nach Empfangen (E2) einer Anfrage in Bezug auf ein Datensegment und in Abhängigkeit von einem anderen Kredit, das dem Strom zugeordnet ist, der in der Anfrage enthalten ist, aktualisiert wird.

3. Verfahren nach Anspruch 2, wobei das Kredit, das dem Strom zugeordnet ist, durch einen gleitenden Mittelwert zwischen einem vorhergehenden Wert des Kredits, das dem Strom zugeordnet ist, und dem anderen Kredit, das dem Strom zugeordnet ist, bestimmt wird.

4. Verfahren nach Anspruch 1, wobei der Schritt des Löschens und gegebenenfalls der Schritt des Auswählens eines Stroms wiederholt wird, solange der verfügbare Speicherplatz der Warteschlange nicht ermöglicht, das empfangene Datensegment zu speichern.

5. Verfahren nach Anspruch 2, wobei eine Vorrichtung zum Routing, die direkt mit einer Client-Einheit verbunden ist, das Kredit, das dem Strom zugeordnet ist, in der Anfrage in Bezug auf ein Datensegment des Stroms, die von der Client-Einheit empfangen wird, initialisiert.

6. Verfahren nach Anspruch 1, wobei das Kredit, das dem Strom zugeordnet ist, zurückgesetzt wird, wenn keine Anfrage in Bezug auf ein Datensegment des Stroms anhängig ist.

7. Vorrichtung (20-23) zum Routing in einem Kommunikationsnetz, das ein namensbasiertes Routing umsetzt, die ausgelegt ist, um mehrere Anfragen in Bezug auf ein Datensegment eines Stroms in einer anderen Anfrage zusammenzufassen, umfassend:

   - Mittel (116) zum Speichern von Datensegmenten, die zu verschiedenen Strömen gehören, in einer Warteschlange im Hinblick auf ihr Routing zu Client-Einheiten, die sie angefordert haben;
   - Mittel (104) zum Bestimmen eines Kredits, das einem Strom zugeordnet ist, wobei das Kredit in Abhängigkeit von einer Anzahl an Anfragen, die durch die Client-Einheiten übertragen werden, und in Bezug auf Datensegmente, die zu dem Strom gehören, variiert;
   - Mittel zum Routing des Datensegments zu Client-Einheiten, die es angefordert haben, nach dem Extrahieren der Warteschlange;
   - Mittel (106) zum Auswählen eines Stroms, die ausgelegt sind, um einen Strom auszuwählen, der mindestens ein Datensegment aufweist, das in der Warteschlange gespeichert ist und für das das zugeordnete Kredit das schwächste ist;
   - Mittel (108) zum Löschen eines Datensegments, das in der Warteschlange gespeichert ist, wobei das Datensegment zu dem ausgewählten Strom gehört,

wobei die Mittel zum Auswählen und zum Löschen aktiviert werden, wenn der verfügbare Speicherplatz der Warteschlange nicht ermöglicht, ein empfangenes Datensegment zu speichern.

8. Mittel zum Routing nach Anspruch 7, ferner umfassend Mittel zum Routing (102) von Anfragen in dem Netz, die von Client-Einheiten gesendet werden, die ausgelegt sind, um in eine Anfrage in Bezug auf ein Datensegment eines Stroms das Kredit, das dem Strom zugeordnet ist, das durch die Mittel zum Bestimmen bestimmt wird, einzufügen.

9. Kommunikationsnetz, umfassend mindestens eine Vorrichtung zum Routing nach Anspruch 7.

10. Programm für eine Vorrichtung zum Routing, das Programmcodebefehle aufweist, die dazu bestimmt sind, die Ausführung der Schritte des Verfahrens nach einem der Ansprüche 1 bis 6 zu steuern, wenn das Programm von der Vorrichtung ausgeführt wird.

11. Aufzeichnungsmedium, das von einer Vorrichtung zum Routing lesbar ist, auf dem das Programm nach Anspruch 10 aufgezeichnet ist.

## Claims

1. Communication method implemented by a device (20-23) for forwarding in a communication network (1) implementing a name-based forwarding, said device being able to aggregate a plurality of requests relating to a data segment of a flow into another request and to store in a queue (116) data segments belonging to various flows before forwarding by the device to the client entities that have requested them, said method comprising:

   - a step (E8) of determining a credit associated with a flow, said credit varying as a function of a number of requests that have been transmitted by client entities and that relate to data segments belonging to the flow;

and on receipt of a data segment in response to said other request, when the available memory space of the queue does not make it possible to store the data segment received,

- a step (E23) of selecting a flow, in which a flow having at least one data segment stored in the queue and for which the associated credit is the lowest is selected;
- a step (E24) of deleting a stored data segment from the queue, said stored data segment belonging to the selected flow;

said method furthermore comprising a step of forwarding the data segment received to the client entities that have requested it, after extraction from the queue.

2. Method according to Claim 1, in which the credit associated with a flow is updated by said device on receipt (E2) of a request relating to a data segment of the flow and as a function of another credit associated with the flow included in said request.

3. Method according to Claim 2, in which the credit associated with the flow is determined by a sliding average between a previous value of the credit associated with the flow and said other credit associated with the flow.

4. Method according to Claim 1, in which the step of deleting is repeated, and if appropriate the step of selecting a flow, as long as the available memory space of the queue does not make it possible to store the data segment received.

5. Method according to Claim 2, in which a forwarding device to which a client entity is directly linked initializes the credit associated with the flow in the request relating to a data segment of the flow received from the client entity.

6. Method according to Claim 1, in which the credit associated with the flow is reinitialized when no request relating to a data segment of said flow is pending.

7. Device (20-23) for forwarding in a communication network implementing a name-based forwarding, designed to aggregate a plurality of requests relating to a data segment of a flow into another request, comprising:

- means (116) for storing data segments belonging to various flows in a queue with a view to their forwarding to client entities that have requested them;
- means (104) for determining a credit associated with a flow, said credit varying as a function of a number of requests that have been transmitted by client entities and that relate to data segments belonging to the flow;

- means for forwarding the data segment to the client entities that have requested it, after extraction from the queue;
- means (106) for selecting a flow, designed to select a flow having at least one data segment stored in the queue and for which the associated credit is the lowest;
- means (108) for deleting a stored data segment from the queue, said data segment belonging to the selected flow,

said selecting and deleting means being activated when the available memory space of the queue does not make it possible to store a data segment received.

8. Forwarding device according to Claim 7, furthermore comprising means for forwarding (102) in the network requests issued by client entities, designed to insert into a request relating to a data segment of a flow the credit associated with the flow determined by the determining means.

9. Communication network comprising at least one forwarding device according to Claim 7.

10. Program for a forwarding device, comprising program code instructions intended to control the execution of the steps of the method according to one of Claims 1 to 6, when said program is executed by said device.

11. Recording medium readable by a forwarding device on which the program according to Claim 10 is recorded.

Fig. 1

Fig 3

Fig. 4

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VAN JACOBSON et al.** *Networking Named Content,* 2009